(19) Europäisches Patentamt
European Patent Office
Office européen des brevets

(11) **EP 2 209 127 A1**

(12) **DEMANDE DE BREVET EUROPEEN**

(43) Date de publication:
**21.07.2010 Bulletin 2010/29**

(51) Int Cl.:
***H01F 1/153*** *(2006.01)*        ***H01F 41/02*** *(2006.01)*

(21) Numéro de dépôt: **09305036.7**

(22) Date de dépôt: **14.01.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(71) Demandeur: **ArcelorMittal - Stainless & Nickel Alloys**
**93200 Saint Denis (FR)**

(72) Inventeurs:
• **Waeckerle, Thierry**
**58000 Nevers (FR)**

• **Demier, Alain**
**58640 Varennes Vauzelles (FR)**
• **Caquard, Christian**
**58270 Billy-Chevannes (FR)**
• **Juhasz, Robert**
**Erk, 3295 (HU)**

(74) Mandataire: **Blot, Philippe Robert Emile**
**Cabinet Lavoix**
**2, place d'Estienne d'Orves**
**75441 Paris Cedex 09 (FR)**

(54) **Procédé de fabrication d'un noyau magnétique en alliage magnétique ayant une structure nanocristalline**

(57)    Procédé de fabrication d'un noyau magnétique en alliage magnétique ayant une structure nanocristalline résultant d'un traitement thermique de nanocristallisation d'un alliage magnétique amorphe susceptible d'acquérir une structure nanocristalline par traitement thermique. Le procédé comprend au moins un recuit sous champ magnétique longitudinal et au moins un recuit sous champ magnétique transversal, les deux recuits sous champ magnétique étant effectués sur le noyau d'alliage ayant une structure nanocristalline. Les conditions de réalisation des recuits sous champ magnétique sont adaptées pour que le paramètre d'efficacité $E_{long}$ du recuit sous champ magnétique longitudinal et le paramètre d'efficacité $E_{trans}$ du recuit sous champ magnétique transversal soient tels que : $0,4 \times E_{long} + 130 \leq E_{trans} \leq 0,3 \, E_{long} + 220$. Le paramètre d'efficacité E est égal à l'intégrale par rapport au temps t, de l'écart entre la température de traitement T(t) à l'instant t lorsque celle-ci est supérieure a 100°C et 100°C, sur la période pendant laquelle le champ magnétique appliqué a une intensité H supérieure à une valeur minimale d'efficacité $H_{min}$, la température étant exprimée en °C et le temps étant exprimé en heures.

FIG.2

EP 2 209 127 A1

**Description**

La présente invention est relative à un procédé de fabrication d'un noyau magnétique en alliage magnétique doux ayant une structure nanocristalline résultant du traitement thermique de nanocristallisation d'un alliage magnétique amorphe.

Pour la réalisation de certains équipements électriques comme les disjoncteurs différentiels destinés à détecter des défauts électriques sur des circuits électriques, on utilise des détecteurs constitués d'un noyau magnétique de forme torique constitué d'un alliage magnétique doux qui est traversé par le circuit sur lequel on veut détecter un éventuel défaut. Ce noyau magnétique est entouré d'un bobinage qui, lorsque le circuit à contrôler comporte un défaut, génère une tension qui déclenche un relais, lequel commande l'ouverture du circuit électrique. De tels disjoncteurs différentiels peuvent être conçus pour détecter des défauts symétriques, c'est-à-dire des défauts correspondant à un courant de fuite sinusoïdale sans composante continue. De tels disjoncteurs sont dits de classe AC.

Les noyaux magnétiques adaptés aux utilisations des disjoncteurs différentiels de classe AC doivent avoir, de préférence, des propriétés d'amplitude d'aimantation à 20° sous des champs compris entre 0,8 A/m et 1,5 A/m suffisantes, et qui en outre ont une stabilité en température de leurs propriétés également suffisante. D'une façon générale, on demande que, pour des excitations à 50 Hz, effectuées à 20°C, l'amplitude d'aimantation $\Delta B_{sin}$ correspondant à des excitations sinusoïdales soit supérieure à 0,5 Tesla pour un champ H compris entre 0,8 A/m et 1,5A/m, et de préférence inférieure ou égale à 1,2 A/m, et pour une excitation redressée double alternance, une amplitude d'aimantation $\Delta B_{dyn}$ supérieure ou égale à 0,18 Tesla pour 2 valeurs de champ magnétique $H_1$ et $H_2$, toutes les deux comprises entre 0,3 et 2 A/m et ayant une différence de au moins 0,4 A/m. Par ailleurs, la variation de la perméabilité magnétique à 50 Hz pour un signal sinusoïdal, $\mu_z$ mesurée pour un champ de 0,8 A/m doit rester inférieur à 20% de la valeur obtenue à 20°C sur une plage de température allant de -25°C à +80°C.

Pour réaliser de tels noyaux magnétiques, on utilise notamment des alliages de type nanocristallin. De tels alliages sont des alliages pouvant être coulés sous forme de bandes très minces ayant une structure amorphe susceptible de devenir une structure nanocristalline, c'est-à-dire constituée essentiellement de cristaux très fins, de taille inférieure à 100 nm, et même inférieure à 25 nm, sous l'effet d'un traitement thermique dit de nanocristallisation. De tels alliages sont décrits par exemple dans EP 0 271 657.

Pour fabriquer un noyau magnétique en alliage nanocristallin, on commence par enrouler un ruban d'alliage magnétique amorphe de façon à constituer une bobine torique de section rectangulaire puis on soumet le tore ainsi constitué à un traitement thermique comprenant au moins un traitement de nanocristallisation, avec ou sans champ magnétique, destiné à conférer à l'alliage une structure nanocristalline. En général, ce traitement thermique comprend également un traitement de recuit postérieur au traitement de nanocristallisation et qui est destiné à optimiser les propriétés magnétiques de l'alliage.

Il est connu d'effectuer un traitement de nanocristallisation au cours duquel le noyau est soumis à un champ magnétique longitudinal, correspondant à un recuit comprenant un maintien à 560°C pendant 1 à 2 heures sous une atmosphère d'hydrogène ou plus généralement sous une atmosphère protectrice. Ce recuit de nanocristallisation est suivi d'un deuxième recuit sous champ magnétique transverse qui correspond à un maintien à une température comprise entre 260°C et 380°C pendant une durée allant de quelques minutes à 1 heure. Avec un tel traitement, il est possible d'obtenir des perméabilités relatives maximales sous champ sinusoïdal (50Hz) appelée $\mu_{r,z}^{max}$ très élevées et qui peuvent être supérieures à 450 000, mais avec des propriétés magnétiques ($\mu_{r,z}$ , $\Delta B$) dont la stabilité en température est insuffisante. En ajustant les paramètres de recuit correspondant à ce traitement, il est possible d'obtenir des tores dont les propriétés magnétiques ont une stabilité en température suffisante, mais qui ont une perméabilité relative plus faible. De tels traitements nécessitent un refroidissement très rapide des tores après les traitements de recuit, ce qui engendre des contraintes de réalisation industrielle (inertie thermique des tores) difficiles à satisfaire. En outre, ce procédé présente une grande sensibilité à la qualité initiale des noyaux qui sont traités, de sorte que le taux de réussite de ces traitements thermiques est inférieur à 95%, ce qui est insuffisant.

On connaît un autre procédé de fabrication de tores magnétiques destinés à des applications dans des disjoncteurs différentiels de la classe AC, qui consiste à effectuer un traitement de nanocristallisation sous atmosphère à très bas point de rosée (inférieur à - 60°C), suivi d'un unique refroidissement extrêmement rapide à une vitesse de refroidissement supérieure à 300°C / h. Un tel traitement peut être réalisé en soumettant les tores à un champ magnétique pendant le recuit, ce qui permet d'obtenir le résultat satisfaisant avec des vitesses de refroidissement moins élevées que lorsqu'il n'y a pas de champ magnétique. Ce procédé présente l'inconvénient, lorsqu'il est utilisé en conditions industrielles, de nécessiter des installations permettant d'effectuer des refroidissements extrêmement brutaux de charges importantes. En outre, du fait des contraintes de réalisation, un tel traitement à un taux de réussite qui n'est pas satisfaisant, en général compris entre 30 et 50%.

On a également proposé de fabriquer des tores magnétiques nanocristallins en effectuant un traitement de nanocristallisation à basse température, c'est-à-dire entre 520°C et 530°C sans recuit sous champ magnétique. Ce procédé permet d'obtenir une haute perméabilité et conduit à une très bonne stabilité en température de l'amplitude d'aimantation ΔB et de la perméabilité magnétique relative, à condition que le tore soit souple à l'état amorphe. En effet, du fait de la basse température de nanocristallisation, la magnétostriction de l'alliage nanocristallin restent très supérieure à 0. Il s'ensuit qu'un bobinage trop serré du tore à l'état amorphe dégrade fortement ses performances lors de la nanocristallisation. Du fait de la difficulté qu'il y a à reproduire les conditions d'enroulage des tores et du collage des tores souvent effectué dans leur boîtier, ce procédé conduit à une dispersion importante des propriétés des tores obtenus. De ce fait, le taux de réussite de ce procédé reste en général très inférieur à 50%.

Le but de la présente invention est de remédier à ces inconvénients en proposant un procédé qui permet de fabriquer des noyaux magnétiques toriques en alliage magnétique doux nanocristallin, avec des propriétés adaptées à l'utilisation dans des disjoncteurs différentiels de la classe AC, et qui permet de fabriquer ces tores avec des taux de réussite supérieurs à 95%.

A cet effet, l'invention a pour objet un procédé de fabrication d'un noyau magnétique en alliage magnétique ayant une structure nanocristalline résultant d'un traitement thermique d'un alliage magnétique amorphe susceptible d'acquérir une structure nanocristalline. Ce procédé comprend au moins un recuit sous champ magnétique longitudinal et au moins un recuit sous champ magnétique transversal, les deux recuits sous champ magnétique étant effectués sur le noyau ayant une structure nanocristalline, et les conditions de réalisation des recuits sous champ magnétique sont adaptées pour que le paramètre d'efficacité $E_{long}$ du recuit sous champ magnétique longitudinal et le paramètre d'efficacité $E_{trans}$ du recuit sous champ magnétique transversal soient tels que :

$$0,4 \times E_{long} + 130 \leq E_{trans} \leq 0,3\, E_{long} + 220$$

le paramètre d'efficacité E d'un recuit sous champ magnétique étant égal à l'intégrale par rapport au temps t, de l'écart entre la température de traitement T(t) à l'instant t lorsque celle-ci est supérieure à 100°C et 100°C, sur la période pendant laquelle le champ magnétique appliqué a une intensité supérieure à une valeur minimale d'efficacité $H_{min}$, la température étant exprimée en °C et le temps étant exprimé en heures.

De préférence, les coefficients d'efficacité $E_{long}$ et $E_{trans}$ sont tous les deux supérieurs à 75.

Le procédé peut comprendre en outre un traitement thermique de nanocristallisation effectué sur le noyau à l'état amorphe, avant les recuits sous champ magnétique.

De préférence, l'alliage magnétique est un alliage dont la composition chimique comprend, en atomes % :

$$0,5\% \leq Cu \leq 1,5\%$$

$$2\% \leq Nb \leq 4\%$$

$$13\% \leq Si \leq 16,5\%$$

$$6\% \leq B \leq 1\%$$

$$0\% \leq Ni + Co \leq 10\%$$

Le reste étant du fer et des impuretés résultant d'élaboration, la somme des teneurs en impuretés étant inférieure à 1%.

Le recuit de nanocristallisation peut comprendre un maintien entre 530°C et 600°C pendant une durée de 30mn à 5h.

De préférence, le recuit sous champ magnétique longitudinal comprend un maintien pendant un temps compris entre 5mn et 10h à une température maximale de traitement $T_{long}$ comprise entre 320°C et 600°C et en ce qu'on applique le champ magnétique longitudinal soit pendant toute la durée du maintien à la température de traitement $T_{long}$ soit durant une partie seulement de la durée de palier (en une seule fois ou par alternance de périodes avec champ magnétique et de périodes sans champ magnétique) pourvu que le palier se termine sous champ magnétique.

Après l'application du champ magnétique longitudinal, si la température du noyau est supérieure à 100°C, on refroidit le noyau jusqu'à une température inférieure ou égale à 100°C, à une vitesse moyenne de refroidissement de préférence supérieure à 300°C/h. Si le refroidissement est effectué sous champ magnétique, il n'y a pas de vitesse préférée de refroidissement.

De préférence, le recuit sous champ magnétique transversal comprend un maintien pendant un temps compris entre 30mn et 3h à une température maximale de traitement $T_{trans}$ comprise entre 260°C et 400°C et on applique le champ magnétique transversal soit pendant le maintien à la température de traitement $T_{trans}$ soit durant une partie seulement de la durée de palier (en une seule fois ou par alternance de périodes avec champ magnétique et de périodes sans champ magnétique) pourvu que le palier se termine sous champ magnétique.

Après l'application du champ magnétique transversal, si la température du noyau est supérieure à 100°C, on refroidit le noyau jusqu'à une température inférieure ou égale à 100°C, à une vitesse moyenne de refroidissement de préférence supérieure à 300°C/h. Si le refroidissement est effectué sous champ magnétique, il n'y a pas de vitesse préférée de refroidissement.

De préférence, le traitement thermique de nanocristallisation comprend un maintien pendant un temps compris entre 1 h et 3h à une température maximale comprise entre 540°C et 600°C.

De préférence, le traitement de nanocristallisation est réalisé sous une atmosphère protectrice telle que l'ammoniac craqué, l'argon ou l'hydrogène.

De préférence, le recuit sous champ magnétique effectué en premier est un recuit sous champ magnétique longitudinal.

Le procédé peut comprendre plus de deux recuits sous champ magnétique, mais n'en comprend de préférence que deux.

Pour au moins un traitement sous champ magnétique, le champ magnétique peut être appliqué de façon continue, durant tout ou partie du palier au moins, durant aussi mais non nécessairement tout ou partie du chauffage et du refroidissement..

Le champ magnétique peut, également, être appliqué par intermittence.

La valeur minimale d'efficacité $H_{min}$ du champ magnétique est par exemple de 100e.

Dans ce qui précède, et par la suite également, on entend par « palier » de recuit, l'ensemble de la période du recuit pendant laquelle la température est supérieure à 10 Oe.

Pendant ce « palier », la température n'est pas nécessairement constante, mais reste inférieure ou égale à la « température maximale de traitement », température maximale à laquelle le noyau est maintenu pendant le « temps de maintien ».

De préférence, le noyau magnétique est un tore obtenu par enroulement d'un alliage magnétique amorphe.

L'invention va maintenant être décrite de façon plus précise mais non limitative en regard des figures annexées dans lesquelles :

- la figure 1 est une vue en perspective d'un noyau torique en alliage nanocristallin ;
- la figure 2 est une représentation schématique dans un plan température temps, d'un traitement thermique de fabrication d'un tore magnétique en alliage nanocristallin ;
- la figure 3 est un schéma représentant dans un plan température, le paramètre d'efficacité d'un recuit sous champ magnétique d'un alliage nanocristallin ;
- la figure 4 est un graphique montrant la répartition d'exemples de traitement dans un plan « coefficient d'efficacité de recuit sous champ longitudinal/ coefficient d'efficacité du recuit sous champs transversal ».

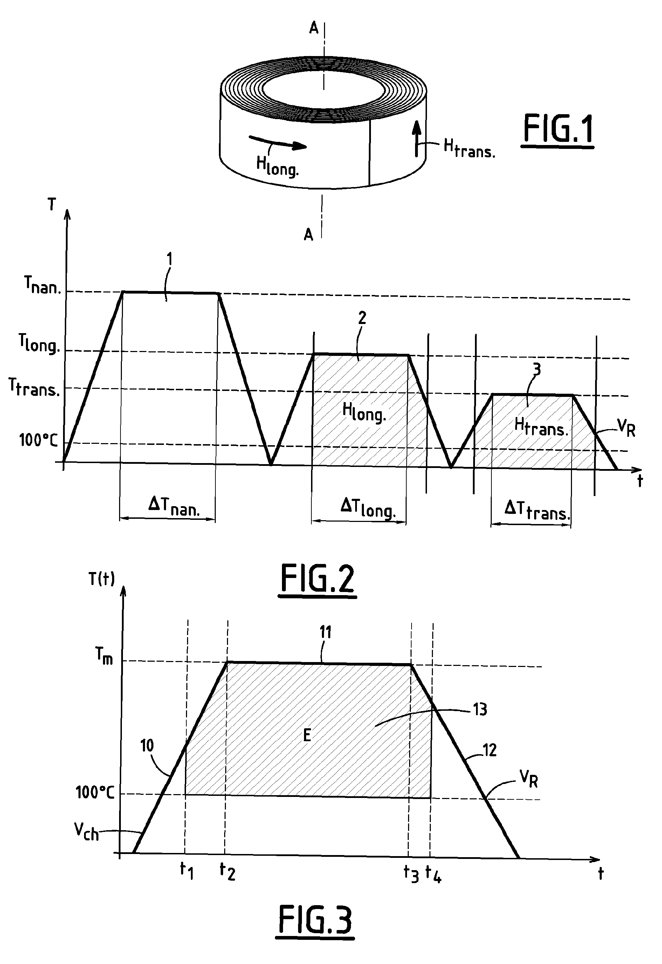

Le noyau magnétique torique, représenté à la figure 1, est constitué d'une bobine d'un ruban 1 d'un alliage magnétique susceptible d'acquérir une structure nanocristallin par traitement thermique. Cette bobine est réalisée initialement par enroulement d'un alliage à l'état amorphe puis elle est soumise à un traitement thermique destinée à lui conférer ses propriétés d'emploi définitives. Ce traitement thermique comporte de façon classique un premier recuit dit « recuit de nanocristallisation », destiné à transformer la structure de l'alliage pour lui conférer une structure nanocristalline, c'est-à-dire une structure qui comprend au moins 50% de grains de taille inférieure à 100 nm et mieux encore de taille inférieure à 25 nm. Ce recuit est suivi, comme cela sera expliqué plus en détail plus loin, d'au moins deux recuits sous champ magnétique qui sont destinés à optimiser les propriétés d'emploi du tore ainsi obtenu.

Comme représenté à la figure 1, le champ magnétique auquel peut être soumis le tore lors de ces recuits peut être soit un champ magnétique longitudinal, soit un champ magnétique transversal. Le champ magnétique longitudinal $H_{LONG}$ est un champ magnétique parallèle à la longueur du ruban et donc parallèle à la tangente au tore dans un plan perpendiculaire à l'axe du tore. Le champ magnétique transversal $H_{trans}$ est un champ magnétique parallèle à l'axe du tore, s'étendant selon la largeur du ruban.

L'alliage dont est constitué le ruban a en général une composition chimique définie de la façon suivante, en atomes % :

$$[Fe_{1-a}Ni_a]100\text{-}x\text{-}y\text{-}z\text{-}\alpha\text{-}\beta\text{-}\gamma Cu_x Si_y B_z Nb_\alpha M'_\beta M''_\gamma$$

avec $a \leq 0,3$, $0,6 \leq x \leq 1,5$, $10 \leq y \leq 17$, $5 \leq z \leq 14$, $2 \leq \alpha \leq 6$, $\beta \leq 7$, $\gamma \leq 8$, M' étant l'un au moins des éléments V, Cr, Al et Zn, M" étant l'un au moins des éléments C, Ge, P, Ga, Sb, In et Be.

De préférence, cet alliage est un alliage contenant principalement du fer dont une partie peut être substituée par du nickel ou du cobalt, à raison de au plus 10 atome %, et qui comprend en outre de 0,5 à 1,5 atome % de cuivre, de 2% à 4 atome % de niobium, de 13% à 16,5 atome % de silicium, de 6% à 8 atome % de bore. Le reste de la composition étant constituée d'impuretés dont la teneur est inférieure à 1%.

Pour conférer à ce noyau magnétique, les propriétés d'emploi recherchées, on effectue un traitement thermique qui est représenté schématiquement à la figure 2 et qui comporte un recuit 1 dit recuit de nanocristallisation destiné à conférer à l'alliage une structure nanocristalline, suivi d'un premier recuit sous champ magnétique repéré 2, et d'un deuxième recuit effectué sous champ magnétique, repéré 3. Les deux recuits sous champs magnétiques sont effectués à une température inférieure à la température maximale de nanocristallisation de l'alliage considéré. Un des deux recuits sous champ magnétique est effectué sous champ magnétique longitudinal et l'autre sous champ magnétique transversale. Dans l'exemple représenté à la figure 3, le premier recuit sous champ magnétique est effectué sous champ longitudinal et le deuxième l'est sous champ transversal. Mais, l'ordre de ces traitements thermiques peut être inversé.

Le recuit de nanocristallisation 1, comprend un maintien à une température $T_{NAN}$ comprise entre 530°C et 600°C, et pendant un temps de maintien $\Delta t_{NAN}$ comprise entre 30 mn et 5 h et de préférence entre 1 h et 3h. Les conditions particulières du traitement sont adaptées en fonction de la composition exacte de l'alliage. L'homme du métier sait faire cette adaptation.

Le premier recuit sous champ magnétique, effectué sous un champ magnétique longitudinal $H_{LONG}$ comprend un maintien à une température maximale de traitement $T_{LONG}$, comprise entre 100°C et 600°C, de préférence entre 320 °C et 570 °C et, mieux, entre 350°C et 550 °C, pendant un temps $\Delta t_{LONG}$ compris entre 15mm et 3h, et de préférence, compris entre 30mm et 2h.

Le deuxième recuit sous champ magnétique 3, effectué sous champ magnétique transverse $H_{TRANS}$, comporte un maintien à une température maximale de traitement $T_{TRANS}$ comprise entre 100°C et 600°C, de préférence entre 260°C et 400°C, et mieux, entre 280 à 360°C ; le temps de maintien à cette température, $\Delta t_{TRANS}$ est compris entre 30 mn et 3 h.

Les traitements de recuit sous champ magnétique doivent être effectués dans les conditions telles que les noyaux sont soumis aux champs magnétiques au moins en fin de maintien à la température maximale $T_{TRANS}$ ou $T_{LONG}$ du recuit, et pendant une fraction du temps de palier qui peut être soit continu soit morcelé en périodes avec champ magnétique séparées par des périodes sans champ magnétique. C'est, en particulier, le cas des traitements dits « en rafale ».

En outre, comme le représente la figure 3, un recuit, sous champs longitudinal ou sous champ transversal, comporte une phase 10 de montée en température, une phase 11 de maintien, une phase 12 de refroidissement jusqu'à la température ambiante. Comme représenté sur cette figure, le tore peut être soumis à un champ magnétique transversal ou longitudinal à partir d'un instant $t_1$ qui peut être antérieur, comme représenté sur la figure, égal ou postérieur à l'instant $t_2$ à partir duquel le tore est maintenu à la température de maintien $T_m$.

La température est maintenue à cette valeur de température de maintien $T_m$ entre l'instant $t_2$ et l'instant $t_3$. A partir de l'instant $t_3$ le noyau est refroidi jusqu'à la température ambiante. Comme représenté sur la figure, le champ magnétique peut être maintenu jusqu'à un instant $t_4$ qui est postérieur à l'instant $t_3$ à partir duquel la température commence à décroître. Cependant, on notera que, à partir de l'instant où le tore n'est plus soumis à un champ magnétique, si la température du tore est supérieure à 100°C, celui-ci doit être refroidi à une vitesse de refroidissement supérieure à 300°C par heure au moins jusqu'à 100°C, de façon à ce que l'effet du traitement sous champ magnétique soit figé.

Par ailleurs, les inventeurs ont constaté que l'efficacité du traitement thermique pouvait être déterminée par un paramètre E d'efficacité égal à l'intégral par rapport au temps, de l'écart entre la température instantanée T(t) et 100°C, lorsque la température T(t) est supérieure à 100°C, pendant toute la durée du maintien du champ magnétique à une valeur supérieure à la valeur minimale d'efficacité $H_{min}$ du champ magnétique. La valeur $H_{min}$ correspondant à la valeur minimale du champ magnétique nécessaire pour saturer magnétiquement les tores. Ce paramètre E peut s'écrire :

$$E = \int_{t1}^{t4} K(H(t)) \times L(T(t)) \times [T(t) - 100] dt$$

avec

$$K(H(t)) = 1 \text{ si } H(t) \geq H_{min} \text{ et } = 0 \text{ si } H(t) < H_{min}$$

et

$$L(T(t)) = 1 \text{ si } T(t) \geq 100\,°C \text{ et } L(T(t)) = 0 \text{ si } T(t) < 100\,°C$$

dans cette formule T(t) est la température à l'instant t et H(t) est l'intensité du champ magnétique à l'instant t.

Cette intégrale est représentée sur la figure par la zone hachurée 13.

Lorsque le chauffage se fait à une vitesse constante $V_{ch}$ jusqu'à une température de maintien Tm, que le maintien dure un temps tm, et que le refroidissement se fait à une vitesse constante Vr ;

- lorsque le champ magnétique n'est appliqué que pendant le maintien, et de façon continue à des valeurs telles que $H \geq H_{min}$, le coefficient d'efficacité E est :

$$E = (Tm - 100) \times tm$$

- lorsque le champ magnétique est appliqué pendant le maintien et pendant le refroidissement, et de façon continue à des valeurs telles que $H \geq H_{min}$, le coefficient d'efficacité E est :

$$E = (Tm - 100) \times tm + \tfrac{1}{2}(Tm - 100)^2 / Vr$$

- lorsque le champ magnétique est appliqué pendant tout le recuit (chauffage, maintien et refroidissement), et de façon continue à des valeurs telles que $H \geq H_{min}$, le coefficient d'efficacité E devient :

$$E = \tfrac{1}{2}(Tm - 100)^2 / Vch + (Tm - 100) \times tm + \tfrac{1}{2}(Tm - 100)^2 / Vr$$

Dans le traitement qui vient d'être décrit, le champ longitudinal et le champ transversal peuvent être soit des champs magnétiques maintenus constants soit des champs magnétiques pulsés. Leurs intensités sont déterminées de façon connue en elle-même de l'homme du métier. Elles sont propres à chaque installation de traitement thermique sous champ magnétique, et sont supérieure à la valeur minimale $H_{min}$ choisie de façon à saturer magnétiquement les tores durant les phases de recuit sous champ. Aussi, on considère que le temps pendant lequel le champ magnétique est appliqué est le temps pendant lequel le champ magnétique est supérieur à $H_{min}$. En général, $H_{min}$ est de l'ordre de 10 Oe.

Lorsque le champs magnétique est pulsé, il peut être caractérisé par un ratio de temps effectif correspond au rapport du temps pendant lequel $H > H_{min}$ au temps total pendant lequel le champ magnétique pulsé est appliqué. Aussi, en reprenant les trois exemples de formules ci-dessus, les coefficients d'efficacité E sont obtenus à partir de ceux qui sont indiqués par multiplication par le ratio de temps effectif qui vient d'être défini. Ce calcul est cohérent avec la formule générale indiquée précédemment.

Les conditions dans lesquelles on réalise ces champs magnétiques sont connues de l'homme du métier. Mais, les inventeurs ont constaté de façon nouvelle et inattendue que lorsque l'on effectuait deux recuits de qualité sous champ magnétique l'un étant sous champ magnétique longitudinal et l'autre sous champ magnétique transversal, postérieurs au traitement de nanocristallisation, on obtenait des propriétés satisfaisantes pour les noyaux magnétiques avec une excellente fiabilité, correspondant à un taux de réussite du traitement supérieur à 95%, en conditions industrielles.

Les inventeurs ont constaté que le recuit sous champ transversal pouvait être fait avant ou après le recuit sous champ longitudinal mais qu'il était cependant préférable d'effectuer le recuit sous champ longitudinal en premier.

Les inventeurs ont également constaté que, pour que les traitements sous champs magnétiques soient efficaces, il convenait que, pour le traitement sous champ longitudinal, le coefficient d'efficacité $E_{long}$ soit supérieur à 75 et de préférence inférieur à 6250, et que, pour le traitement sous champ transverse, le coefficient soit supérieur à 75 et de préférence inférieur à 3750.

En outre, les inventeurs ont constaté de façon inattendue que les résultats de propriétés d'emploi des noyaux magnétiques étaient adaptés à l'utilisation pour des disjoncteurs différentiels de la classe AC si et seulement si les coefficients d'efficacité E LONG et E $_{TRANS}$ des deux recuits sous champ longitudinal et sous champ transversal, satisfont à la condition suivante :

$$0,4 \text{ x } E_{LONG} + 130 \leq E_{TRANS} \leq 0,3 \text{ x } E_{LONG} + 220$$

Les inventeurs ont également constaté que les propriétés pouvaient être améliorées, ou la fiabilité du traitement pouvait être améliorée, si le traitement comprenait en outre un recuit supplémentaire sous champ longitudinal.

Enfin, on notera que le traitement de nanocristallisation peut également être réalisé sous champ magnétique (longitudinal ou transverse).

A titre d'exemple et de comparaison, on a réalisé des noyaux magnétiques constitués de tores en alliage du type Fe = 73,5 ; Cu = 1 ; Nb = 3 ; Si = 15,5 ; B = 7, (composition atomique) ayant un diamètre extérieur de 20 mm, un diamètre intérieur de 13 mm et une hauteur de 12 mm. Les tores ont été réalisés en bobinant des rubans à l'état amorphe, puis en soumettant les tores ainsi obtenus à des traitements thermiques qui comprenaient tous un traitement de nanocristallisation à une température de 560°C ou 575°C pendant 1 h30 sous une atmosphère d'hydrogène, suivi d'un traitement de recuit sous champ longitudinal et d'un recuit sous champ transversal.

Dans tous les cas, le recuit sous champ longitudinal a comporté un chauffage en 2h jusqu'à une température $T_{LONG}$ de palier auquel les tores ont été maintenus pendant 1 h avec l'application d'un champ longitudinal, de 79 A/m puis les tores ont été refroidis sous champ longitudinal pendant une heure jusqu'à la température de 90°C, puis ils ont été refroidis librement sans champ appliqué jusqu'à la température ambiante.

Les températures de maintien ont été de 350°C, de 400°C, de 450°C, de 500°C et 550°C.

Tous les recuits sous champ transversal ont comporté un chauffage en 2 h jusqu'à une température de maintien $T_{TRANS}$ à laquelle les tores ont été maintenus pendant 1 h avec l'application d'un champ magnétique transversal, de 79 A/m. Puis, les tores ont été refroidis toujours sous le champ magnétique transversal en 1 h jusqu'à 90°C puis le refroidissement a été laissé libre sans champ magnétique jusqu'à la température ambiante.

Pour ce deuxième recuit sous champ transversal, les températures de maintien ont été de 280 °C, 300 °C, 320 °C, 340 °C, 360 °C.

Après traitement, les noyaux magnétiques obtenus ont été caractérisés en courant continu par mesure du rapport Br/Bm de l'aimantation rémanente Br à l'aimantation maximale Bm, et en courant alternatif à 50Hz sous des ondes sinusoïdales ($_{SIN}$) ou redressées mono alternances ($_{STAT}$) et doubles alternances ($_{DYN}$) par des mesures à -25°C, + 20°C à + 100°C sous des champs magnétiques de 0,4 A/m, 0,8 A/m et 1,2 A/m, des grandeurs $\Delta B_{SIN}$, $\Delta B_{STAT}$, $\Delta B_{DYN}$, qui représentent les aimantations maximales obtenues pour chacune de ces sollicitations. En outre, on a mesuré le rapport de la perméabilité dynamique à la perméabilité sinusoïdale ($\mu_{DYN}/\mu_{SIN}$) pour un champ de 1,2 A/m à la température de 20°C. On a en outre mesuré la stabilité en température de la perméabilité en sinus à 50Hz, $\mu_z$, pour un champ magnétique de 0,8 A/m d'une part entre -25°C et 20°C, et d'autre part entre 20°C et 100°C.

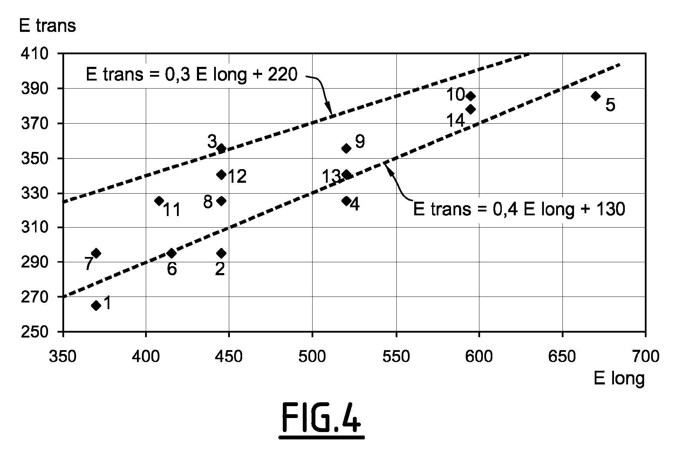

L'ensemble des résultats obtenus sur les échantillons 1 à 14 sont reportés au tableau 1 et les conditions de coefficients d'efficacité du traitement sont reportés à la figure 4.

Les exemples 7, 8, 9, 10, 11, 12, 13 et 14 qui satisfont aux conditions de coefficient d'efficacité du traitement telles qu'elles ont été indiquées, ont l'ensemble de leurs propriétés d'emploi qui répondent aux exigences imposées pour l'utilisation en tant que tore détecteur d'un disjoncteur différentiel de qualité AC.

En revanche, les exemples 1, 2, 3, 4, 5, 6 qui ne répondent pas aux conditions de coefficient d'efficacité, ont des propriétés qui ne sont pas satisfaisantes. A titre d'exemple, l'exemple 1 a une variation de ses propriétés entre +20 °C et -25 °C de 48%, et de 45% entre +20 °C et +100 °C, ce qui est beaucoup trop élevé. En outre, la variation d'aimantation dynamique sous un champ de 0,8 A/m ou sous un champ de 1,2 A/m est très insuffisante. De même pour l'exemple 2, la stabilité en température entre 20°C et 100°C est très insuffisante, puisqu'on constate un écart de 42% sur la perméabilité. En outre, l'amplitude de l'aimantation dynamique est également très insuffisante. Pour le contre exemple 3, bien que la stabilité en température soit satisfaisante et que l'amplitude d'aimantation dynamique soit satisfaisante, l'amplitude de l'aimantation sinusoïdale pour un champ de 1,2 A à 20°C est très insuffisante.

Le contre exemple 5 a une stabilité en température entre 20°C et 100°C qui est très insuffisante. En outre, l'amplitude de son aimantation dynamique sous un champ de 0,8 A /m est insuffisante. L'exemple 6 a une stabilité en température entre 20°C et 100°C très insuffisante et des amplitudes d'aimantation dynamiques aussi bien à 0,8 A/m que 1,2 A/m très insuffisante.

tableau 1

| N° exemple | $T_{long}$ | $T_{trans}$ | Br/Bm | $\mu_{dyn}\mu_{dyn}$ à 1,2A/m | Stab en Tre de μ50Hz à 0,8A/m et -25°C (en%) | Stab en Tre de μ50Hz à 0,8A/m et -20°C (en%) | $\Delta B_{sinus}$ à 1,2 A/m et 20°C (en T) | $\Delta B_{dyn}$ à 0,8 A/m et 20°C (en T) expl | $\Delta B_{dyn}$ à 1,2 A/m et 20°C (en T) expl | $E_{long}$ | $E_{trans}$ |
|---|---|---|---|---|---|---|---|---|---|---|---|
| 1 | 350 | 280 | 0,8 | 0,15 | 48 | -45 | 1,021 | 0,133 | 0,151 | 370 | 265 |
| 7 | 350 | 300 | 0,36 | 0,55 | -1,3 | -19 | 0,695 | 0,280 | 0,375 | 370 | 295 |
| 2 | 400 | 300 | 0,86 | 0,08 | 1,5 | -42 | 1,066 | 0,069 | 0,087 | 445 | 295 |
| 8 | 400 | 320 | 0,66 | 0,28 | -2,5 | -13 | 0,960 | 0,240 | 0,266 | 445 | 325 |
| 3 | 400 | 340 | 0,16 | 0,88 | -1,1 | -4 | 0,383 | 0,211 | 0,334 | 445 | 355 |
| 4 | 450 | 320 | 0,73 | 0,21 | -4,3 | -17,4 | 0,985 | 0,167 | 0,201 | 520 | 325 |
| 9 | 450 | 340 | 0,28 | 0,67 | -5,9 | 5,1 | 0,561 | 0,230 | 0,372 | 520 | 355 |
| 10 | 500 | 360 | 0,44 | 0,47 | -13,2 | 16,2 | 0,653 | 0,204 | 0,307 | 595 | 385 |
| 5 | 550 | 360 | 0,55 | 0,33 | -6,5 | -31 | 0,748 | 0,145 | 0,247 | 670 | 385 |
| 11 | 375 | 320 | 0,21 | 0,56 | -4,3 | -6,8 | 0,537 | 0,194 | 0,301 | 408 | 325 |
| 6 | 380 | 300 | 0,81 | 0,11 | 1,5 | -25,5 | 1,010 | 0,094 | 0,114 | 415 | 295 |
| 12 | 400 | 330 | 0,46 | 0,47 | -6,6 | -4,5 | 0,684 | 0,220 | 0,319 | 445 | 340 |
| 13 | 450 | 330 | 0,46 | 0,24 | -9,2 | 2 | 0,819 | 0,199 | 0,266 | 520 | 340 |
| 14 | 500 | 355 | 0,61 | 0,23 | -15,9 | -7,7 | 0,888 | 0,202 | 0,269 | 595 | 378 |

Comme on le voit, les conditions de traitement qui viennent d'être décrites, conformes à l'invention, permettent d'obtenir des propriétés satisfaisantes. En outre, les inventeurs ont constaté que le taux de réussite de ces traitements était dans des conditions industrielles supérieures à 95%.

Le procédé selon l'invention a l'avantage de permettre de très bien contrôler les performances. des tores magnétiques de classe AC. En outre, il permet de proposer des tores nanocristallin ayant à 20°C une variation de l'amplitude d'aimantation dynamique pour des ondes 50Hz double alternance toujours supérieurs à 0,2 Tesla pour une plage de champ magnétique H1-H2 distante d'au moins 0,4 A/m et comprise entre 0,3 et 1,5 A/m. Cette propriété permet à la fois de disposer, même en courant pulsé, d'une énergie importante pour déclencher le disjoncteur et la sécurité électrique et, grâce à la plage de champ H1-H2, d'obtenir une bonne aptitude au design du transformateur de défaut électrique réalisé à partir du tore. En outre, et surtout, ce procédé permet d'obtenir un taux de réussite très important supérieur à 95%, dans des fours industriels, sans qu'il soit nécessaire d'utiliser des technologies de refroidissement puissantes autres que celles qui sont nécessaires pour contrôler la production de chaleur générée par la réaction de nanocristallisation qui est une réaction exothermique.

**Revendications**

1. Procédé de fabrication d'un noyau magnétique en alliage magnétique ayant une structure nanocristalline résultant d'un traitement thermique de nanocristallisation d'un alliage magnétique amorphe susceptible d'acquérir une structure nanocristalline par traitement thermique, **caractérisé en ce qu'**il comprend au moins un recuit sous champ magnétique longitudinal et au moins un recuit sous champ magnétique transversal, les deux recuits sous champ magnétique étant effectués sur le noyau d'alliage ayant une structure nanocristalline, et **en ce que** les conditions de réalisation des recuits sous champ magnétique sont adaptées de telle sorte que le paramètre d'efficacité $E_{long}$ du recuit sous champ magnétique longitudinal et le paramètre d'efficacité $E_{trans}$ du recuit sous champ magnétique transversal sont tels que :

$$0,4 \times E_{long} + 130 \leq E_{trans} \leq 0,3\, E_{long} + 220$$

le paramètre d'efficacité E d'un recuit sous champ magnétique étant égal à l'intégrale par rapport au temps t, de l'écart entre la température de traitement T(t) à l'instant t lorsque celle-ci est supérieure à 100°C et 100°C, sur la période pendant laquelle le champ magnétique appliqué a une intensité supérieure à une valeur minimale d'efficacité $H_{min}$, la température étant exprimée en °C et le temps étant exprimé en heures.

2. Procédé selon la revendication 1, **caractérisé en ce que** les coefficients d'efficacité $E_{long}$ et $E_{trans}$ sont, tous les deux, supérieurs à 75.

3. Procédé selon la revendication 1 ou la revendication 2, **caractérisé en ce qu'**il comprend un traitement thermique de nanocristallisation effectué sur le noyau à l'état amorphe, avant les recuits sous champ magnétique.

4. Procédé selon l'une quelconque des revendications 1 à 3, **caractérisé en ce que** le recuit sous champ magnétique effectué en premier est un recuit sous champ magnétique longitudinal.

5. Procédé selon l'une quelconque des revendications 1 à 4, **caractérisé en ce que** l'alliage magnétique est un alliage dont la composition chimique comprend, en atomes % :

$$0,5\% \leq Cu \leq 1,5\%$$

$$2\% \leq Nb \leq 4\%$$

$$13\% \leq Si \leq 16,5\%$$

$$6\% \quad \leq \quad B \quad \leq \quad 1\%$$

$$0\% \quad \leq \quad Ni + Co \leq \quad 10\%$$

Le reste étant du fer et des impuretés résultant d'élaboration, la somme des teneurs en impuretés étant inférieure à 1%.

6. Procédé selon la revendication 5, **caractérisé en ce que** le recuit sous champ magnétique longitudinal comprend un maintien pendant un temps compris entre 5mm et 10h à une température maximale de traitement $T_{long}$, comprise entre 320°C et 600°C et **en ce qu'**on applique le champ magnétique longitudinal au moins pendant la fin du maintien à la température de traitement $T_{long}$.

7. Procédé selon la revendication 6, **caractérisé en ce que**, après l'application du champ magnétique longitudinal, si la température du noyau est supérieure à 100°C, on refroidit le noyau jusqu'à une température inférieure ou égale à 100°C, à une vitesse moyenne de refroidissement supérieure à 300°C/h.

8. Procédé selon l'une quelconque des revendications 5 à 7, **caractérisé en ce que** le recuit sous champ magnétique transversal comprend un maintien pendant un temps compris entre 30mn et 3h à une température maximale de traitement $T_{trans}$ comprise entre 260°C et 400°C et **en ce qu'**on applique le champ magnétique transversal au moins pendant la fin du maintien à la température de traitement $T_{trans}$.

9. Procédé selon la revendication 8, **caractérisé en ce que**, après l'application du champ magnétique transversal, si la température du noyau est supérieure à 100°C, on refroidit le noyau jusqu'à une température inférieure ou égale à 100°C, à une vitesse moyenne de refroidissement supérieure à 300°C/h.

10. Procédé selon l'une quelconque des revendications 5 à 9, **caractérisé en ce que** le traitement thermique de nanocristallisation comprend un maintien pendant un temps compris entre 30mn et 5h à une température maximale comprise entre 530 °C et 600 °C.

11. Procédé selon la revendication 10, **caractérisé en ce que** le traitement de nanocristallisation est réalisé sous une atmosphère protectrice telle que l'ammoniac craqué, l'argon ou l'hydrogène.

12. Procédé selon l'une quelconque des revendications 1 à 11, **caractérisé en ce qu'**il comprend trois recuits sous champ magnétique.

13. Procédé selon l'une quelconques des revendications 1 à 12, **caractérisé en ce que** pour au moins un traitement sous champ magnétique, le champ magnétique est appliqué de façon continue.

14. Procédé selon l'une quelconque des revendications 1 à 12, **caractérisé en ce que** le champ magnétique est appliqué par intermittence.

15. Procédé selon l'une quelconque des revendications 1 à 14, **caractérisé en ce que** la valeur minimale d'efficacité $H_{min}$ du champ magnétique est de 10 Oe.

16. Procédé selon l'une quelconque des revendications précédentes, **caractérisé en ce que** le noyau magnétique est un tore obtenu par enroulement d'un alliage magnétique amorphe.


**Revendications modifiées conformément à la règle 137(2) CBE.**

1. Procédé de fabrication d'un noyau magnétique en alliage magnétique ayant une structure nanocristalline résultant d'un traitement thermique de nanocristallisation d'un alliage magnétique amorphe susceptible d'acquérir une structure nanocristalline par traitement thermique ayant une composition chimique définie de la façon suivante, en atomes % :

$$[Fe_{1-a}Ni_a]100\text{-}x\text{-}y\text{-}z\text{-}\alpha\text{-}\beta\text{-}\gamma Cu_x Si_y B_z Nb_\alpha M'_\beta M''\gamma$$

avec $a \leq 0,3$, $0,6 \leq x \leq 1,5$, $10 \leq y \leq 17$, $5 \leq z \leq 14$, $2 \leq \alpha \leq 6$, $\beta$; $7$, $\gamma \leq 8$, M' étant l'un au moins des éléments V, Cr, Al et Zn, M" étant l'un au moins des éléments C, Ge, P, Ga, Sb, In et Be, **caractérisé en ce qu'**il comprend au moins un recuit sous champ magnétique longitudinal et au moins un recuit sous champ magnétique transversal, les deux recuits sous champ magnétique étant effectués sur le noyau d'alliage ayant une structure nanocristalline, le recuit sous champ magnétique longitudinal ayant un coefficient d'efficacité $E_{long}$ et le recuit sous champ magnétique transversal ayant un coefficient d'efficacité $E_{trans}$, le paramètre d'efficacité $E_{long}$ du recuit sous champ magnétique longitudinal et le paramètre d'efficacité $E_{trans}$ du recuit sous champ magnétique transversal étant tels que :

$$0,4 \times E_{long} + 130 \leq E_{trans} \leq 0,3\, E_{long} + 220$$

un recuit sous champ magnétique est un traitement thermique comprenant une montée en température jusqu'à une température de maintien Tm, un maintien à cette température et un refroidissement, au cours de ce traitement thermique, le noyau magnétique est soumis à un champ magnétique, le paramètre d'efficacité E d'un recuit sous champ magnétique est égal à l'intégrale par rapport au temps t, de l'écart entre la température de traitement T(t) à l'instant t lorsque celle-ci est supérieure à 100°C et 100°C, sur la période pendant laquelle le champ magnétique appliqué a une intensité supérieure à une valeur minimale d'efficacité $H_{min}$ correspondant à la valeur minimale du champ magnétique nécessaire pour saturer magnétiquement le noyau magnétique, la température étant exprimée en °C et le temps étant exprimé en heures.

**2.** Procédé selon la revendication 1, **caractérisé en ce que** les coefficients d'efficacité $E_{long}$ et $E_{trans}$ sont, tous les deux, supérieurs à 75.

**3.** Procédé selon la revendication 1 ou la revendication 2, **caractérisé en ce qu'**il comprend un traitement thermique de nanocristallisation effectué sur le noyau à l'état amorphe, avant les recuits sous champ magnétique.

**4.** Procédé selon l'une quelconque des revendications 1 à 3, **caractérisé en ce que** le recuit sous champ magnétique effectué en premier est un recuit sous champ magnétique longitudinal,

**5.** Procédé selon l'une quelconque des revendications 1 à 4, **caractérisé en ce que** l'alliage magnétique est un alliage dont la composition chimique comprend, en atomes % :

|  |  |  |  |  |
|---|---|---|---|---|
| 0,5% | ≤ | Cu | ≤ | 1,5% |
| 2% | ≤ | Nb | ≤ | 4% |
| 13% | ≤ | Si | ≤ | 16,5% |
| 6% | ≤ | B | ≤ | 8% |
| 0% | ≤ | Ni + Co | ≤ | 10% |

Le reste étant du fer et des impuretés résultant d'élaboration, la somme des teneurs en impuretés étant inférieure à 1 %.

**6.** Procédé selon la revendication 5, **caractérisé en ce que** le recuit sous champ magnétique longitudinal comprend un maintien pendant un temps compris entre 5mm et 10h à une température maximale de traitement $T_{long}$, comprise entre 320°C et 600°C et **en ce qu'**on applique le champ magnétique longitudinal au moins pendant la fin du maintien à la température de traitement $T_{long}$.

**7.** Procédé selon la revendication 6, **caractérisé en ce que**, après l'application du champ magnétique longitudinal, si la température du noyau est supérieure à 100°C, on refroidit le noyau jusqu'à une température inférieure ou égale à 100°C, à une vitesse moyenne de refroidissement supérieure à 300°C/h.

**8.** Procédé selon l'une quelconque des revendications 5 à 7, **caractérisé en ce que** le recuit sous champ magnétique transversal comprend un maintien pendant un temps compris entre 30mn et 3h à une température maximale de traitement $T_{trans}$ comprise entre 260°C et 400°C et **en ce qu'**on applique le champ magnétique transversal au moins pendant la fin du maintien à la température de traitement $T_{trans}$.

**9.** Procédé selon la revendication 8, **caractérisé en ce que**, après l'application du champ magnétique transversal, si la température du noyau est supérieure à 100°C, on refroidit le noyau jusqu'à une température inférieure ou égale à 100°C, à une vitesse moyenne de refroidissement supérieure à 300°C/h.

**10.** Procédé selon l'une quelconque des revendications 5 à 9, **caractérisé en ce que** le traitement thermique de nanocristallisation comprend un maintien pendant un temps compris entre 30mn et 5h à une température maximale comprise entre 530°C et 600°C.

**11.** Procédé selon la revendication 10, **caractérisé en ce que** le traitement de nanocristallisation est réalisé sous une atmosphère protectrice telle que l'ammoniac craqué, l'argon ou l'hydrogène.

**12.** Procédé selon l'une quelconque des revendications 1 à 11, **caractérisé en ce qu'**il comprend trois recuits sous champ magnétique.

**13.** Procédé selon l'une quelconques des revendications 1 à 12, **caractérisé en ce que** pour au moins un traitement sous champ magnétique, le champ magnétique est appliqué de façon continue.

**14.** Procédé selon l'une quelconque des revendications 1 à 12, **caractérisé en ce que** le champ magnétique est appliqué par intermittence.

**15.** Procédé selon l'une quelconque des revendications 1 à 14, **caractérisé en ce que** la valeur minimale d'efficacité $H_{min}$ du champ magnétique est de 790 A/m (10 Oe).

**16.** Procédé selon l'une quelconque des revendications précédentes, **caractérisé en ce que** le noyau magnétique est un tore obtenu par enroulement d'un alliage magnétique amorphe.

EP 2 209 127 A1

FIG.1

FIG.2

FIG.3

FIG.4

## EP 2 209 127 A1

**Europäisches Patentamt**
**European Patent Office**
**Office européen des brevets**

**RAPPORT DE RECHERCHE EUROPEENNE**

Numéro de la demande

EP 09 30 5036

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 7 042 310 B1 (PETZOLD JOERG [DE] ET AL) 9 mai 2006 (2006-05-09) * colonne 5, ligne 59 - colonne 6, ligne 42; figures 5,8 * ----- | 1-16 | INV. H01F1/153 H01F41/02 |
| X | WO 2004/088681 A (VACUUMSCHMELZE GMBH & CO KG [DE]; HERZER GISELHER [DE]; OTTE DETLEF [D] 14 octobre 2004 (2004-10-14) * revendication 19; tableaux 1,5 * ----- | 1-16 | |
| X | EP 0 883 141 A (MECAGIS [FR]) 9 décembre 1998 (1998-12-09)<br><br>* page 3, ligne 49 - page 4, ligne 15 * ----- | 1-4,6,8, 10-12, 14-16 | |
| X | FR 2 733 376 A (SCHNEIDER ELECTRIC SA [FR]) 25 octobre 1996 (1996-10-25) * page 6, ligne 31 - ligne 35; revendication 3 * ----- | 1-4,16 | |
| | | | **DOMAINES TECHNIQUES RECHERCHES (IPC)**<br><br>H01F |

Le présent rapport a été établi pour toutes les revendications

| Lieu de la recherche | Date d'achèvement de la recherche | Examinateur |
|---|---|---|
| La Haye | 7 mai 2009 | Primus, Jean-Louis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 30 5036

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-05-2009

| Document brevet cité au rapport de recherche | | Date de publication | Membre(s) de la famille de brevet(s) | | Date de publication |
|---|---|---|---|---|---|
| US 7042310 | B1 | 09-05-2006 | AU | 5964100 A | 02-01-2001 |
| | | | WO | 0077928 A1 | 21-12-2000 |
| | | | DE | 10081656 D2 | 30-08-2001 |
| | | | DE | 19926699 A1 | 11-01-2001 |
| | | | EP | 1188235 A1 | 20-03-2002 |
| WO 2004088681 | A | 14-10-2004 | AT | 377833 T | 15-11-2007 |
| | | | CN | 1757079 A | 05-04-2006 |
| | | | EP | 1609159 A2 | 28-12-2005 |
| | | | ES | 2297407 T3 | 01-05-2008 |
| | | | JP | 2006525655 T | 09-11-2006 |
| | | | KR | 20050115944 A | 08-12-2005 |
| | | | RU | 2351031 C2 | 27-03-2009 |
| | | | US | 2006077030 A1 | 13-04-2006 |
| EP 0883141 | A | 09-12-1998 | AT | 241849 T | 15-06-2003 |
| | | | AU | 733279 B2 | 10-05-2001 |
| | | | AU | 6483698 A | 10-12-1998 |
| | | | CN | 1201991 A | 16-12-1998 |
| | | | CZ | 9801659 A3 | 13-01-1999 |
| | | | DE | 69814983 D1 | 03-07-2003 |
| | | | DE | 69814983 T2 | 13-05-2004 |
| | | | ES | 2196510 T3 | 16-12-2003 |
| | | | FR | 2764430 A1 | 11-12-1998 |
| | | | HU | 9801275 A2 | 28-12-2000 |
| | | | JP | 11008110 A | 12-01-1999 |
| | | | PL | 326622 A1 | 07-12-1998 |
| | | | RO | 119574 B1 | 30-12-2004 |
| | | | RU | 2190023 C2 | 27-09-2002 |
| | | | SK | 67798 A3 | 11-01-1999 |
| | | | TR | 9801001 A2 | 21-10-1999 |
| | | | US | 5935346 A | 10-08-1999 |
| | | | ZA | 9804148 A | 26-11-1998 |
| FR 2733376 | A | 25-10-1996 | CN | 1185857 A | 24-06-1998 |
| | | | DE | 69621925 D1 | 25-07-2002 |
| | | | DE | 69621925 T2 | 06-02-2003 |
| | | | EP | 0821830 A1 | 04-02-1998 |
| | | | ES | 2176455 T3 | 01-12-2002 |
| | | | WO | 9633505 A1 | 24-10-1996 |
| | | | ZA | 9602964 A | 22-10-1996 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- EP 0271657 A